# EUROPÄISCHE PATENTSCHRIFT

(11) **EP 2 003 046 B1**
(45) Veröffentlichungstag und Bekanntmachung des Hinweises auf die Patenterteilung: **01.12.2010**
(21) Anmeldenummer: 08010831.9
(22) Anmeldetag: 13.06.2008
(51) Int. Cl.: B62J 1/00

(54) **Ergonomischer Sattel für Fahrräder**
Ergonomic saddle for bicycles
Selle ergonomique pour bicyclettes

(30) Priorität: 14.06.2007 DE 202007008321 U
(43) Veröffentlichungstag der Anmeldung: 17.12.2008
(73) Patentinhaber: SQ-lab GmbH, 82064 Strasslach (DE)
(72) Erfinder: Hild, Tobias, 82064 Strasslach (DE)
(74) Vertreter: Koelle, Alexander

(56) Entgegenhaltungen:
- EP-A- 1 495 952
- DE-U1-202004 014 467
- DE-U1-202005 013 749
- FR-A- 526 791
- FR-A- 917 506
- GB-A- 2 045 703

## Beschreibung

Die Erfindung betrifft einen Sattel für ein Zweirad, bestehend aus einer herkömmlichen harten Sattelschale und einem herkömmlichen Sattelgestell mit wenigstens zwei Streben. Unter einem Zweirad wird ein lenkergeführtes Fahrrad, wie ein übliches Fahrrad, ein Mountain-Bike, ein Rennrad, ein Motorrad und ein Mofa, aber auch ein Motorrad mit zwei hinteren Antriebsrädern und einem Vorderrad verstanden.

Bekannt sind herkömmliche Ausführungsformen eines Sattels für Zweiräder, wobei insbesondere bei Sätteln für Rennräder die Form bislang so gestaltet wurde, dass das Körpergewicht auf dem Dammbereich oder dem Schambein und weniger auf den Sitzknochen lastet.

Nachteil dieser Sattelformen ist, dass bei Männern auf den Dammbereich und bei Frauen im Bereich des Schambeins ein zu hoher Druck lastet. Es besteht die Gefahr, dass beim Mann der hohe Druck im Dammbereich negative Auswirkungen auf die sexuelle Leistungsfähigkeit des Mannes haben kann. Bei Frauen liegt das Schambein meist etwas tiefer als beim Mann, so dass dieses meistens schmerzhaft auf die Sattelnase drückt. In der Vergangenheit gab es verschiedene Lösungsansätze verschiedener Sattelhersteller, den Druck im Dammbereich oder im Bereich des Schambeins zu senken, z.B. durch die Verwendung einer weichen Sattelnase, beispielsweise durch die Verwendung von Gel oder von Aussparungen und Löchern im Sattel. Sättel mit derartigen Merkmalen sind bereits aus EP 1 394 025 und aus US 5 356 205 bekannt geworden. Mit diesen Sättel kann jedoch eine noch nicht ausreichende Druckentlastung im Dammbereich bzw. Schambeinbereich erreicht werden.

Ein anderer Sattel ist aus dem Dokument EP-A-1 495 952 bekannt.

Aufgabe der vorliegenden Erfindung ist es, den Druck bei Männern im Dammbereich und/oder bei Frauen im Bereich des Schambeins zu senken und diese Druckstellen automatisch zu entlasten, ohne dabei jedoch auf die bislang bekannten Lösungsansätze zurückzugreifen. Ferner ist Aufgabe der Erfindung, die durch die Tretbewegung wechselseitig auftretenden Druckspitzen an den Sitzknochen zu minimieren und Rückenbeschwerden vorzubeugen.

Dazu wurden mehrere hundert Personen aller Altersstufen und beider Geschlechts genau vermessen, insbesondere wurde der Abstand der Sitzknochen mittels eines eigens hierfür entwickelten Messverfahrens gemessen. Es zeigte sich, dass der Sitzknochenabstand unabhängig von Geschlecht, Körpergröße und Körpergewicht um bis zu maximal 8 cm abweicht. Ein weiterer Faktor ist die Höhe des Schambeinbogens aus welcher sich der Winkel errechnet, in dem die Schambeine zum Schambeinbogen in Abhängigkeit vom Sitzknochenabstand zusammenlaufen. Hinzu kommen ein unterschiedlicher Knochenbau und eine unterschiedliche Beckenbodenmuskulatur. Darüber hinaus nimmt das Schmerzempfinden an den Sitzknochen mit zunehmender Fahrzeit und mit einer gewissen Abhärtung ab. Insbesondere zu Saisonbeginn ist das Schmerzempfinden an den Sitzknochen höher als in der Saisonmitte. Aufgrund dieser sehr individuellen und von außen nicht ohne weiteres erkennbaren Körpermerkmale war es bis jetzt noch nicht möglich, einen Sattel herzustellen, der unabhängig von Geschlecht, Körpergröße und Körpergewicht den Druck auf den vorerwähnten Druckstellen senkt. Mit den Erfindungen nach DE 20 2004 014 467.0 und DE 20 2005 013 749.9 war es möglich, die erwähnte Entlastung auf den vorerwähnten Druckstellen zu senken und eine individuelle Einstellung auf die Körpermerkmale des Fahrers zu gewährleisten. Die vorliegende Erfindung ist eine Weiterentwicklung von DE 20 2004 014 467.0 und DE 20 2005 013 749.9.

Komfort- und druckentlastende Faktoren sind grundsätzlich das Polster, das Bezugsmaterial, die Größe der Auflagefläche, die Form der Auflagefläche und die Federung. Federungen von Sätteln wurden bislang über zwei Federn aus Federstahl oder Elastomeren im hinteren Bereich des Sattels realisiert. Eine weitere Möglichkeit bestand darin die Materialelastizität und - anpassungsfähigkeit zu nutzen. Bei einem weicheren Material der Sattelschale begann die Sattelschale aber sich in Längsrichtung zu verbiegen, was keinen Vorteil für die Sitzknochen brachte, die im hinteren Teil des Sattels relativ weit außen auf dem Sattel aufliegen. Die Verwendung von unterschiedlich harten Materialien in der Sattelschale hat sich lange Zeit als die beste Methode herausgestellt, die Elastizität und Anpassungsfähigkeit der Sattelschale so zu beeinflussen, dass an bestimmten Stellen ein Nachgeben oder Verbiegen möglich ist und an anderen Stellen nicht. Messungen mittels einer elektronischen Druckmessfolie auf dem Sattel eines stationären Fahrrads über einen längeren Zeitraum haben nicht nur die Druckverteilung an den Sitzknochen und im Dammbereich bzw. im Schambeinbereich ergeben, sondern auch, dass die Druckspitzen an den Sitzknochen auftreten und in derselben Frequenz wie die Trittfrequenz extrem von der linken auf die rechte Sattelseite und wieder zurück wandern. Ein steifer Sattel wirkt dieser Beckenbewegung nur unnötig entgegen. Kann der Sattel jedoch - ausgelöst durch die Tretbewegung - kippen, so lassen sich die wechselseitig auftretenden Druckspitzen an den Sitzknochen minimieren.

Ferner hilft die Kippbewegung des Sattels Rückenleiden und Rückenbeschwerden vorzubeugen und zu verhindern, da die Wirbel gezielt und kontrolliert bewegt werden.

Durch kontrollierte Bewegung erfahren die Bandscheiben, die als Puffer zwischen den Wirbelkörpern sitzen, Druck und Zug und werden so mit Nährstoffen versorgt. Durch Entlastung gewinnen die Bandscheiben wieder optimale Höhe und können so maximale Druckabsorption leisten.

Die seitliche Bewegung des Beckens während dem Radfahren sorgt für eine sehr vorteilhafte Durchblutung der Bandscheiben, vor allem im Bereich der Lendenwirbel, die am häufigsten von Beschwerden betroffen sind. Bei extremen Fahrmanövern, z.B. im Gelände, wird das Fahrrad oft in eine starke Schräglage bei nahezu aufrechtem Oberkörper gedrückt. Die Kippbewegung des Sattels verhindert in diesem Fall eine Überstreckung der Wirbel, da der Sattel der extremen Bewegung folgt. Nach einer ausgiebigen Fahrt und einer dementsprechenden Erschöpfung neigt der Radfahrer dazu, vor allem bergauf, "aus dem Rücken" heraus zu arbeiten. Diese wechselseitigen Pumpbewegungen können ebenfalls zu einer Überstreckung der Wirbel führen. Videoanalysen haben ergeben, dass nach einer Fahrt von ca. 40 Minuten und einer dementsprechenden Erschöpfung die Bewegung der Wirbelsäule immer stärker wird und in einen Bereich gerät, der zu stark belastend ist und zu einer Überstreckung der Wirbel führt.

Einerseits sollen also durch die Ermöglichung einer seitlichen Kippbewegung des Sattels bei eher statischem Geradeausfahren auf befestigter Straße die Wirbel und das Becken kontrolliert bewegt werden. Andererseits soll durch eine kontrollierte seitliche Kippbewegung des Sattels eine Überstreckung der Wirbel vermieden werden.

Die Aufgabe der vorliegenden Erfindung wird erfindungsgemäß durch die kennzeichnenden Merkmale des ersten Patentanspruchs gelöst. Durch die Merkmale der Unteransprüche wird die Erfindung vorteilhaft ausgestaltet bzw. modifiziert. Der Sattel besteht aus einem handelsüblichen Gestell mit wenigstens einer Strebe, insbesondere aber zwei Streben und einer herkömmlichen und handelsüblichen harten Sattelschale 1 mit oder ohne Polsterung 10. Hinzu kommt ein ringförmiges oder ovales Federelement 3, sog. Flexring, sowie ein linkes und rechtes Dämpfungselement 4, 5 und ein zentrales, weiches Dämpfungselement 6, die im Zusammenwirken eine seitliche Kippbewegung der Sattelschale vorzugsweise im Bereich von 3° bis 14° ermöglichen, wobei durch das linke und rechte Dämpfungselement 4, 5 eine Begrenzung des Kippwinkels erreicht und damit eine Überstreckung der Wirbel vermieden wird.

Diese Elastizität und Anpassungsfähigkeit des Sattels durch die Kippbewegung wird auch Flex genannt. Die Auflageflächen nehmen automatisch den Winkel ein, der die größte Auflagefläche bietet und somit die geringste Druckbelastung zwischen der Auflagefläche und den Sitzknochen gewährleistet. Der sog. Flexring wird von hinten unter die beiden Auflageflächen des Sattels geschoben und einerseits über die beiden Streben 2 sowie andererseits über die Schraube 15 oder den Gewindestift 16 und der Stoppmutter 13 fixiert und mit der Sattelschale 1 verbunden. Die durch den Flexring 3 erreichte seitliche Kippbewegung des Sattels und die Materialelastizität der linken und der rechten Auflageflächen 7 erhöhen den Komfort erheblich.

Über verschiedene Materialhärten des Flexrings 3 lassen sich durch ein Auswechseln des Flexrings die Elastizität und die Anpassungsfähigkeit der Auflageflächen 7 des Sattels einstellen. Dadurch ist es möglich den Flex auf das Körpergewicht des Fahrers und seine Sitzposition entsprechend anzupassen und einzustellen. Der Flex ist somit kontrollierbar.

Bei einer vorteilhaften Ausführungsform stellen die beiden waagrechten Auflageflächen 7, auch Sitzflächen genannt, die höchsten Erhebungen 8 des Sattels dar. Durch die Absenkung der Sattelnase 9 gegenüber den beiden hinteren Auflageflächen 7 wird sowohl eine Druckentlastung auf die frauentypische Druckstelle, den weiblichen Schambeinbogen als auch eine Druckentlastung auf die männliche Druckstelle, den Dammbereich, erreicht und gewährleistet.

Bei einer weiteren vorteilhaften Ausführungsform ist durch die beiden auswechselbaren Auflageflächen 7 eine Anpassung des Sattels auf den individuellen Sitzknochenabstand des jeweiligen Fahrers möglich.

Bei einer weiteren vorteilhaften Ausführungsform ist das zentrale, weiche Dämpfungselement 6 lösbar mit der Sattelschale 1 verbunden und ermöglicht durch eine Auswechslung eine Anpassung an den individuellen Komfortwunsch des jeweiligen Fahrers. Ferner wird dadurch eine einfache Wartung und Auswechslung im Verschleißfalle erreicht. Diese Vorteile werden auch durch die auswechselbaren beiden harten Dämpfungselemente 4, 5, die sog. Dämpferpads, erreicht.

Eine lösbare Verbindung der Streben 2 mit dem zentralen Federelement 3, dem sog. Flexring, sollen ebenfalls eine einfache Wartung und eine individuelle Anpassung an Komfort und Dämpfungseigenschaften ermöglichen. Somit kann der sog. Flexring 3 an die individuellen Bedürfnisse des Fahrers leicht angepasst werden.

Bei einer weiteren vorteilhaften Ausführungsform ist der Flexring 3 mit einem weichen Kunststoff 11, vorzugsweise einem Elastomer-Kunststoff, zur besseren Dämpfung und Erhöhung der Komforteigenschaften des Sattels gefüllt.

Durch eine Vertiefung 17, auch "Dip" genannt, zwischen den beiden Auflageflächen 7 soll zum einen sowohl eine weitere Druckentlastung auf die frauentypische Druckstelle, den weiblichen Schambeinbogen als auch eine weitere Druckentlastung auf die männliche Druckstelle, den Dammbereich, erreicht und gewährleistet werden. Zum anderen soll dadurch eine weitere Federung und Komforterhöhung ermöglichen.

Durch die zentrale Anbindung der Sattelschale 1 an das zentrale Dämpfungselement 6 und den Flexring 3 kann bei entsprechender Materialwahl und Materialstärkewahl die Sattelschale links und rechts nach unten flexen, konstruktionsbedingt wie oben beschrieben wechselweise aber durch den Materialflex auch gleichphasig, z.B. bei erhöhtem Körpergewicht oder bei Fahrbahnunebenheiten. Für die Dauer der Flexbewegung der Schale ändert sich die Form der Oberfläche des Sattels. Die Auflagefläche der Sitzknochen 7 senkt sich gegenüber dem Niveau der Auflagefläche des Dammbereichs. Dies hat erhöhten Druck auf empfindliche Nervenbahnen und Blutgefäße zur Folge. Durch die Vertiefung 17, den "Dip", wird diese im Betrieb auftretende Veränderung berücksichtigt.

In der Zeichnung zeigt:

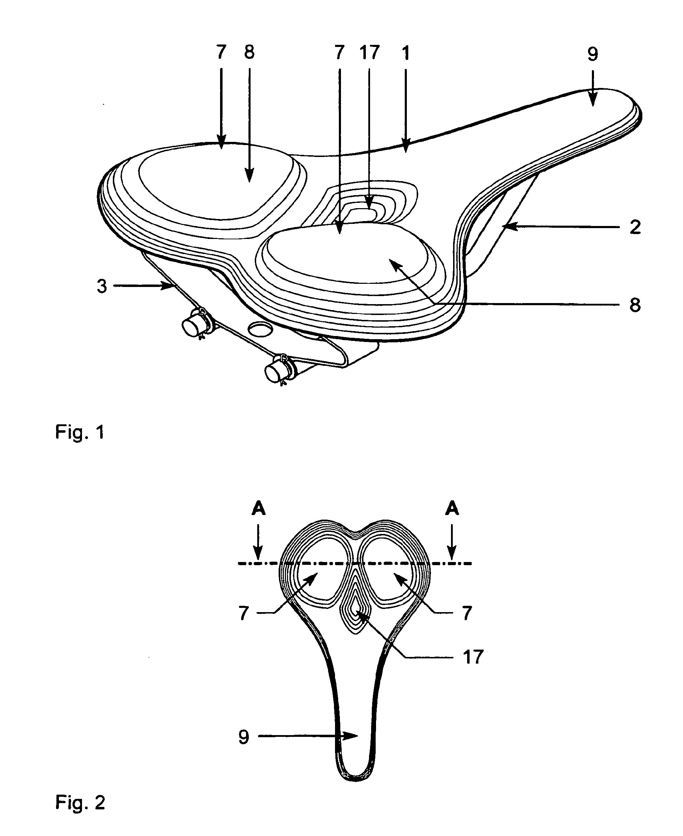

Fig. 1 eine perspektivische Draufsicht von hinten auf den Sattel mit sog. Flexring 3, den beiden Auflageflächen 7, den höchsten Erhebungen des Sattels 8 und der Vertiefung 17
Fig. 2 eine Draufsicht mit den Auflageflächen 7, der Sattelnase 9 und der Vertiefung 17

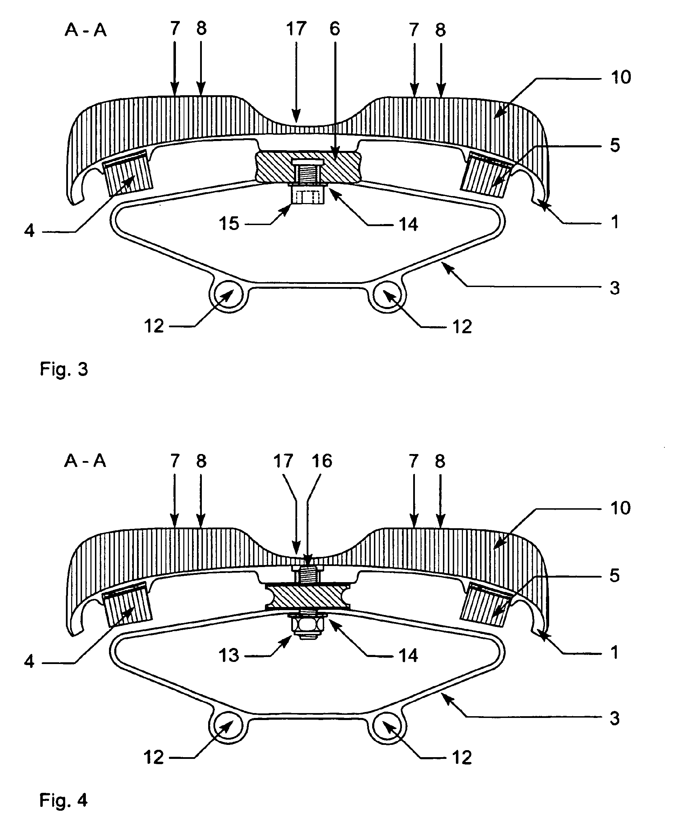

Fig. 3 eine Seitenansicht von hinten im Schnittbereich A-A mit einem zentralen, weichen Dämpfungselement 6, welches fest mit der Sattelschale 1 und lösbar mit dem sog. Flexring 3 verbunden ist und den harten Dämpfungselementen 4, 5
Fig. 4 eine Seitenansicht von hinten im Schnittbereich A-A mit einem zentralen, weichen Dämpfungselement 6, welches sowohl mit der Sattelschale 1 lösbar als auch mit dem sog. Flexring 3 lösbar verbunden ist und den harten Dämpfungselementen 4, 5

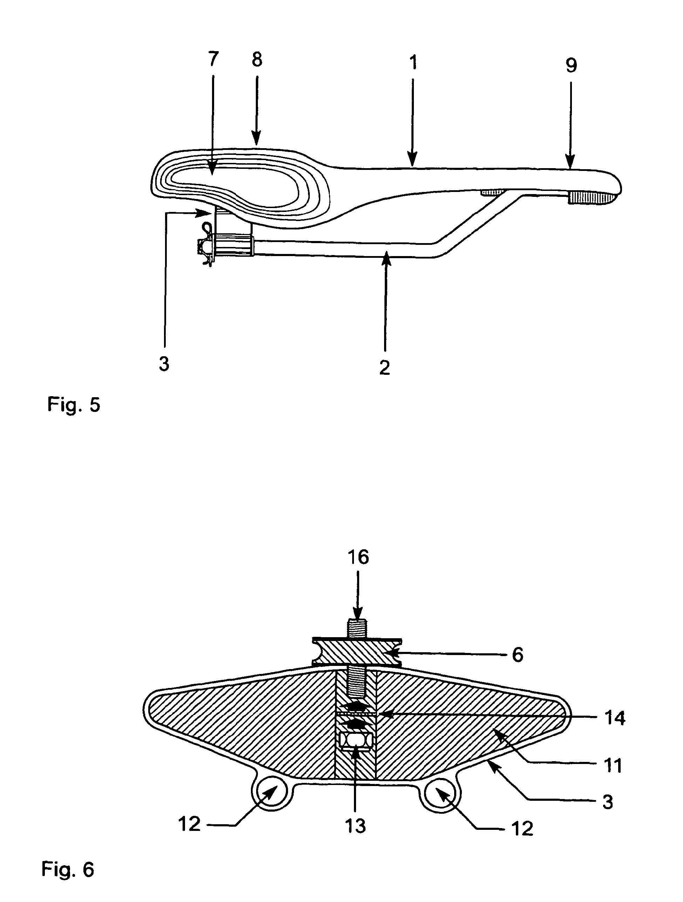

Fig. 5 eine Seitenansicht des Sattels der Länge nach, die zeigt, dass die beiden waagerechten Auflageflächen 7 die höchste Erhebung des Sattels 8 darstellen (sog. Stufensattel)
Fig. 6 einen Querschnitt durch den sog. Flexring 3, der mit einem weichen Kunststoff 11 gefüllt ist und mittels eines Gewindestifts 16, einer Kunststoffbeilagscheibe 14 und einer Stoppmutter 13 sowie dem weichen Dämpfungselement 6 lösbar mit der Sattelschale 1 verbunden ist

### Bezugszeichenliste

- 1: Sattelschale
- 2: Strebe
- 3: Ringförmiges oder ovales Federelement (sog. Flexring)
- 4: Hartes Dämpfungselement, links
- 5: Hartes Dämpfungselement, rechts
- 6: Zentrales, weiches Dämpfungselement
- 7: Auflagefläche, links, rechts
- 8: Höchste Erhebung des Sattels
- 9: Sattelnase
- 10: Sattelpolster bzw. Sattelpolsterung
- 11: Weicher, dämpfender Kunststoff zur Füllung des sog. Flexrings
- 12: Öffnungen für die Streben 2
- 13: Stoppmutter
- 14: Kunststoffbeilagscheibe
- 15: Inbusschraube
- 16: Gewindestift
- 17: Sattelvertiefung im Bereich zwischen der linken und rechten Auflagefläche und in Richtung der Sattelnase 9

## Patentansprüche

1. Sattel für Zweiräder, insbesondere für Fahrräder, bestehend aus wenigstens einer Sattelschale (1), mit oder ohne Polsterung (10), und wenigstens einer Strebe (2), insbesondere aber zwei Streben, **dadurch gekennzeichnet, dass** in dem hinteren Bereich des Sattels ein ringförmiges oder ovales Federelement, sog. Flexring (3), welches fest mit der Strebe oder den Streben verbunden ist, zwei harte Dämpfungselemente (4, 5) als Federwegbegrenzer, sog. Dämpferpad, zur Begrenzung der seitlichen Kippbewegung der Sattelschale, vorzugsweise im Bereich von 3° bis 14°, sowohl zur linken als auch zur rechten Seite, eines auf der linken Sattelseite (4) und eines auf der rechten Sattelseite (5), und ein mit der Sattelschale (1) fest verbundenes, weiches Dämpfungselement (6), vorzugsweise aus Elastomer-Kunststoff, in der Mitte des hinteren Sattelbereichs vorgesehen sind, wobei der sog. Flexring (3) lösbar mit dem zentralen, weichen Dämpfungselement (6) und somit lösbar mit der Sattelschale (1) verbunden ist.

2. Sattel nach Anspruch 1, **dadurch gekennzeichnet, dass** zwei Auflageflächen (7), insbesondere für die Sitzknochen des Fahrers, vorgesehen sind, die die höchsten Erhebungen des Sattels (8) darstellen, insbesondere gegenüber der Sattelnase (9).

3. Sattel nach Anspruch 1 oder 2, **dadurch gekennzeichnet, dass** zwei auswechselbare Auflageflächen (7) auf der Sattelschale im Bereich der waagrechten Sitzfläche vorgesehen sind, die eine Anpassung an den individuellen Sitzknochenabstand ermöglichen.

4. Sattel nach Anspruch 1 bis 3, **dadurch gekennzeichnet, dass** das zentrale, weiche Dämpfungselement (6) lösbar mit der Sattelschale (1) verbunden ist.

5. Sattel nach Anspruch 1 bis 4, **dadurch gekennzeichnet, dass** die zwei harten Dämpfungselemente (4, 5), auf der linken und rechten Sattelseite lösbar mit der Sattelschale (1) verbunden sind.

6. Sattel nach Anspruch 1 bis 5, **dadurch gekennzeichnet, dass** die Streben (2) lösbar mit dem sog. Flexring (3), verbunden sind.

7. Sattel nach Anspruch 1 bis 6, **dadurch gekennzeichnet, dass** der Flexring (3) mit einem weichen Kunststoff (11), vorzugsweise einem Elastomer-Kunststoff, gefüllt ist.

8. Sattel nach Anspruch 1 bis 7, **dadurch gekennzeichnet, dass** zwischen den beiden Auflageflächen (7) eine Vertiefung (17) vorgesehen ist

## Claims

1. A saddle for two-wheeled vehicles, in particular for bicycles, comprising at least one saddle shell (1) with or without padding (10), and at least one strut (2), but in particular two struts, **characterized in that** the rear area of the saddle includes an annular or oval spring element, referred to as flexring (3), which is fixedly connected with the strut or the struts, two hard damping elements (4, 5) acting as spring travel limiters and referred to as damper pads to limit the lateral tilting movement of the saddle shell, preferably in the range from 3° to 14°, to both the left and the right side, one arranged on the left-hand saddle side (4) and one on the right-hand saddle side (5), and a soft damping element (6), preferably of an elastomeric plastic material, in the middle of the rear saddle area, said flexring (3) being releasably attached to the central soft damping element (6) and thus releasably to the saddle shell (1).

2. The saddle according to claim 1, **characterized in that** two support surfaces (7), in particular for the rider's sitting bones, are provided, which represent the highest elevations of the saddle (8), in particular relative to the saddle nose (9).

3. The saddle according to claim 1 or 2, **characterized in that** two replaceable support surfaces (7) are provided on the saddle shell in the area of the horizontal sitting surface, which enable an adaptation to the individual distance between the sitting bones.

4. The saddle according to claims 1 to 3, **characterized in that** the central soft damping element (6) is releasably attached to the saddle shell (1).

5. The saddle according to claims 1 to 4, **characterized in that** the two hard damping elements (4, 5) on the left and right side of the saddle are releasably attached to the saddle shell (1).

6. The saddle according to claims 1 to 5, **characterized in that** the struts (2) are releasably attached to the component referred to as flexring (3).

7. The saddle according to claims 1 to 6, **characterized in that** the flexring (3) is filled with a soft plastic material (11), preferably an elastomeric plastic material.

8. The saddle according to claims 1 to 7, **characterized in that** a recess (17) is provided between the two support surfaces (7).

## Revendications

1. Selle pour deux roues, en particulier pour vélos, comprenant au moins une coque de selle (1), avec ou sans rembourrage (10), et au moins un support (2), mais en particulier deux supports, **caractérisée en ce que** dans la zone arrière de la selle sont prévus un élément de ressort de forme annulaire ou ovale, appelé bague semi-flexible (3), qui est relié fixement au support ou aux supports, deux éléments d'amortissement (4, 5) durs comme limiteur de course de ressort, appelés tampons amortisseurs, pour limiter le mouvement de basculement latéral de la coque de selle, de préférence dans la plage de 3° à 14°, aussi bien vers le côté gauche que vers le côté droit, l'un sur le côté gauche de la selle (4) et l'autre sur le côté droit de la selle (5), et un élément d'amortissement (6) souple, relié fixement à la coque de siège (1), de préférence à base de plastique élastomère, au centre de la zone de selle arrière, ladite bague semi-flexible (3) étant reliée de façon amovible à l'élément d'amortissement (6) central et souple et donc de façon amovible à la coque de selle (1).

2. Selle selon la revendication 1, **caractérisée en ce que** deux surfaces d'appui (7), en particulier pour les os iliaques du cycliste, sont prévues, lesquelles représentent les éminences les plus hautes de la selle (8), en particulier par rapport au bec de selle (9).

3. Selle selon la revendication 1 ou 2, **caractérisée en ce que** deux surfaces d'appui (7) amovibles sont prévues sur la coque de selle dans la zone de l'assise horizontale, qui permettent une adaptation à l'espacement des os iliaques de chaque individu.

4. Selle selon les revendications 1 à 3, **caractérisée en ce que** l'élément d'amortissement (6) central et souple est relié de façon amovible à la coque de siège (1).

5. Selle selon les revendications 1 à 4, **caractérisée en ce que** les deux éléments d'amortissement (4, 5) durs sont reliés de façon amovible à la coque de selle (1) sur les côtés droit et gauche de la selle.

6. Selle selon les revendications 1 à 5, **caractérisée en ce que** les montants (2) sont reliés de façon amovible à la bague semi-flexible (3).

7. Selle selon les revendications 1 à 6, **caractérisée en ce que** la bague semi-flexible (3) est remplie d'un plastique (11) souple, de préférence un plastique élastomère.

8. Selle selon les revendications 1 à 7, **caractérisée en ce qu'**une cavité (17) est prévue entre les deux surfaces d'appui (7).
